# EUROPÄISCHE PATENTSCHRIFT

(11) **EP 2 125 180 B1**
(45) Veröffentlichungstag und Bekanntmachung des Hinweises auf die Patenterteilung: **19.01.2011**
(21) Anmeldenummer: 08715767.3
(22) Anmeldetag: 14.02.2008
(51) Int. Cl.: B01F 7/00, B01F 7/06, B01F 15/00, C02F 3/02

(54) **HORIZONTALRÜHRWERK UND EINRICHTUNG ZUM ERZEUGEN EINER STRÖMUNG IN EINEM KLÄRBECKEN MIT DEM HORIZONTALRÜHRWERK**
HORIZONTAL AGITATOR AND DEVICE FOR PRODUCING A FLOW IN A CLEARING BASIN USING THE HORIZONTAL AGITATOR
AGITATEUR HORIZONTAL ET DISPOSITIF POUR PRODUIRE UN COURANT DANS UN BASSIN DE DÉCANTATION AVEC L'AGITATEUR HORIZONTAL

(30) Priorität: 19.02.2007 DE 102007008135
(43) Veröffentlichungstag der Anmeldung: 02.12.2009
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2008/001129
(87) Internationale Veröffentlichungsnummer: WO 2008/101633

(56) Entgegenhaltungen:
- WO-A-99/20523
- DE-A1- 3 931 918
- US-A- 4 566 801
- US-A- 4 627 791

## Beschreibung

Horizontalrührwerk und Verfahren zum Erzeugen einer Strömung in einem Klärbecken mit dem Horizontalrührwerk.

Die Erfindung betrifft ein Horizontalrührwerk nach dem Oberbegriff des Anspruchs 1.

Aus der DE 40 15 478 C1 ist ein Horizontalrührwerk bekannt. Dabei ist ein Propeller mit einer Antriebseinrichtung verbunden. Die Antriebseinrichtung umfasst einen Tauchmotor, der üblicherweise über ein Getriebe den Propeller antreibt. Der Tauchmotor ist dabei axial zum Propeller angeordnet, d. h. eine Antriebswelle des Tauchmotors verläuft im Wesentlichen parallel zu einer Rotationsachse des Propellers.

Daneben sind auch Horizontalrührwerke bekannt, bei denen der Tauchmotor zwar axial versetzt zum Propeller, nicht jedoch in einer durch eine Rotationsachse des Propellers verlaufenden Horizontalebene angeordnet ist. D. h. der Tauchmotor ist in diesem Fall entweder unterhalb oder oberhalb der durch die Rotationsachse des Propellers verlaufende Horizontalebene angeordnet.

Herkömmliche Horizontalrührwerke sind an einem Gestell angebracht, welches in der Nähe der Wand eines Klärbeckens oder an einer Brücke montiert ist. Durch die Wirkung des Propellers wird eine vom Tauchmotor bzw. vom Gestell zum Propeller gerichtete Horizontalströmung erzeugt.

Die Effizienz der bekannten Horizontalrührwerke ist nicht besonders hoch. Abgesehen davon sind herkömmliche Horizontalrührwerke nicht besonders universell. Zur Erzielung einer bestmöglichen Effizienz ist es nach dem Stand der Technik erforderlich, je nach Größe des Klärbeckens einen geeigneten Propeller auszuwählen und diesen mit einer dafür geeigneten vorgegebenen Drehzahl zu betreiben. Jedes Horizontalrührwerk ist also auf den jeweiligen Anwendungsfall auszulegen. Das ist aufwändig.

Aufgabe der Erfindung ist es, die Nachteile nach dem Stand der Technik zu beseitigen. Es soll insbesondere ein Horizontalrührwerk angegeben werden, mit dem mit verbesserter Effizienz eine Horizontalströmung in einem Klärbecken erzeugt werden kann. Nach einem weiteren Ziel der Erfindung soll ein möglichst universell einsetzbares Horizontalrührwerk bereitgestellt werden.

Diese Aufgabe wird durch die Merkmale des Anspruchs 1 gelöst. Zweckmäßige Ausgestaltungen ergeben sich aus den Merkmalen der Ansprüche 2 bis 20.

Dokument US-A- 4 566 801 offenbart einen Horizontalrührwerk gemäß dem Oberbegriff des Anspruchs 1.

Nach Maßgabe der Erfindung ist vorgesehen, dass stromabwärts des zumindest einen Propellers in mindestens einer Axialebene sich erstreckende plattenförmige Strömungsleitelemente vorgesehen. Unter dem Begriff "Axialebene" wird eine Ebene verstanden, welche parallel zur Rotationsachse des Propellers verläuft oder die Rotationsachse enthält. Durch das Vorsehen der plattenförmigen Strömungsleitelemente wird der Ausbildung von Zopfströmungen entgegengewirkt. Zopfströmungen sind unerwünscht, da sie die Effizienz des Rührwerks vermindern.

Die Strömungsleitelemente sind zweckmäßigerweise aus Blech oder faserverstärktem Kunststoff hergestellt. Sie können sich in einer Vertikalebene und/oder einer Horizontalebene erstrecken. Die Strömungsleitelemente können an einem den Tauchmotor aufnehmenden Gestell oder auch am Boden eines Klärbeckens angebracht sein. Es kann aber auch sein, dass die Strömungsleitelemente am Tauchmotor oder an einer den Tauchmotor umfassenden Antriebseinrichtung angebracht sind. Die Antriebseinrichtung kann neben dem Tauchmotor beispielsweise ein Getriebe umfassen.

Der Tauchmotor oder die Antriebseinrichtung kann an einer am Gestell vorgesehenen Vertikalbewegungseinrichtung befestigt sein. Das ermöglicht ein Anheben oder Absenken des Horizontalrührwerks im Klärbecken.

Nach einer weiteren Ausgestaltung ist vorgesehen, dass eine Anströmkante der Strömungsleitelemente mit zunehmendem radialen Abstand eine in die Hauptstromrichtung weisende Neigung oder Krümmung aufweist. Damit wird gewährleistet, dass sich an den Strömungsleitelementen keine zopfbildenden verunreinigungen ansammeln können. Sie werden vielmehr bedingt durch die Strömung entlang der geneigten oder gekrümmten Anströmkante bewegt, bis sie vom Strömungsleitelement weggespült werden.

Nach einer vorteilhaften Ausgestaltung ist vorgesehen, dass eine elastische Formänderung der aus einem elastisch verformbaren Material hergestellten Blätter so eingestellt ist, dass deren Profilanstellwinkel zumindest im Bereich eines radial außen liegenden Abschnitts sich mit zunehmender Rotationsgeschwindigkeit in vorgegebener weise vergrößert. Unter dem Begriff "Profilanstellwinkel" wird ein Winkel verstanden, mit dem die Blätter gegenüber einer senkrecht zur Rotationsachse des Propellers verlaufenden Radialebene angestellt bzw. schräg gestellt sind. Bedingt durch die in definierter Weise eingestellte vorgegebene elastische Formänderung der Blätter kann erreicht werden, dass der Propeller nicht nur bei einer bestimmten Rotationsgeschwindigkeit sondern in einem Rotationsgeschwindigkeits- bzw. Drehzahlbereich mit einer hohen Effizienz betrieben werden kann. Mit zunehmender Rotationsgeschwindigkeit nimmt der Flüssigkeitsdruck auf die Blätter zu. Bedingt durch deren definiert eingestellte Elastizität nimmt dabei ein Profilanstellwinkel der Blätter in einem radial außen liegenden Bereich zu. Damit passt sich das Profil der Blätter den jeweiligen Bedingungen an, so dass in einem weiten Drehzahlbereich effizient eine Strömung erzeugbar ist. Das vorgeschlagene Horizontalrührwerk lässt sich damit universell in Klärbecken unterschiedlicher Größe einsetzen, ohne dass dazu jeweils ein anderer Propeller vorzusehen ist. Damit kann Herstellungsaufwand eingespart werden.

Der Propeller kann zwei, drei, vier, fünf oder mehr Blätter aufweisen. Bei dem Propeller kann es sich um einen links- oder rechtsdrehenden Propeller handeln. Zweckmäßigerweise sind die Blätter aus einem mit Fasern verstärkten Verbundwerkstoff hergestellt. Die Matrix des Verbundwerkstoffs ist zweckmäßigerweise aus Kunststoff hergestellt. Es kann sich dabei um herkömmlich bekannte Harze handeln, welche zur Herstellung von verbundwerkstoffen geeignet sind, z. B. Epoxid-Harze und dgl. Der Verbundwerkstoff kann als Fasern Kohle- und/oder Aramid- und/oder hochverstreckte Polyethylen-Fasern enthalten. Die Einstellung der elastischen Formänderung der Blätter kann durch die Auswahl, die Menge und die Anordnung der Fasern erfolgen. Ferner kann die elastische Formänderung, insbesondere die elastische Änderung des Profilanstellwinkels, durch die Dicke des Profils eingestellt werden. Zur Einstellung der gewünschten elastischen Formänderung eines Blatts kann eine Fläche des Blatts in Flächenelemente gegliedert und jedem Flächenelement ein Elastizitätsmodul zugewiesen werden. Sodann kann bei der Herstellung durch Variation der Art, Menge und Anordnung der Fasern sowie der Dicke des Profils der jeweilige Elastizitätsmodul eingestellt werden.

Zweckmäßigerweise weist der Propeller eine Dichte im Bereich von 0,9 bis 1,1 g/cm³ auf. Die Dichte entspricht damit im Wesentlichen der Dichte des den Propeller umgebenden flüssigen Mediums, insbesondere zu klärender Abwässer. Durch die vorgeschlagen Anpassung der Dichte des Propellers an das umgebende flüssige Medium wird eine durch Dichteunterschiede bedingte Radialkraft auf die Propellerachse vermieden. Damit wird die Haltbarkeit von die Propellerachse aufnehmenden Lagern erhöht.

Nach einem weiteren vorteilhaften Ausgestaltungsmerkmal sind radial außen liegende Endabschnitte der Blätter in eine Richtung entgegen der vom Propeller erzeugten axialen Hauptstromrichtung umgebogen. Damit kann verhindert werden, dass sich im Bereich der Blattenden unerwünschte radiale und axial der Hauptströmung entgegengerichtete Seitenströmungen ausbilden. Solche Seitenströmungen vermindern die Effizienz des Propellers. Die vorgeschlagene Umbiegung der Blattenden findet insbesondere bei steif ausgebildeten Blättern Anwendung, deren Profilanstellwinkel sich mit zunehmender Rotationsgeschwindigkeit nicht wesentlich ändert.

Unter dem Begriff "Endabschnitt" wird ein radial außen liegender Bereich des Blatts verstanden, welcher die Spitze des Blatts enthält. Der "Endabschnitt" weist üblicherweise eine geringere radiale Länge als der "radial außen liegende Abschnitt" auf. Es kann aber auch sein, dass der "radial außen liegende Abschnitt" genauso lang wie der "Endabschnitt" ist. Bei einer Kombination der elastischen Formänderung der Blätter mit der Umbiegung der Endabschnitte ist das Blatt so ausgestaltet, dass auch bei einer maximalen elastischen Formänderung der Blätter noch eine Umbiegung der Endabschnitte entgegen der axialen Hauptstromrichtung vorhanden ist.

Nach einer weiteren Ausgestaltung weisen die umgebogenen Endabschnitte in einer Radialebene eine der Drehrichtung des Propellers entgegengesetzte Krümmung auf. Damit kann auf einfache Weise verhindert werden, dass sich so genannte "zopfbildende Verunreinigungen", beispielsweise Fäden, Schnüre, Haare und dgl., vom umgebogenen Endabschnitt eingefangen werden.

Es hat sich als zweckmäßig erwiesen, dass eine Länge des Endabschnitts höchstens 1/5 des Radius des Blatts beträgt. Eine solche Länge des Endabschnitts hat sich bereits als ausreichend erwiesen, um unerwünschten Seitenströmungen effektiv entgegenzuwirken.

Vorteilhafterweise ist der Tauchmotor axial zum Propeller angebracht. D. h. der Tauchmotor ist dem Propeller im Bereich einer Nabe desselben stromabwärts nachgeordnet. Die Antriebswelle des Tauchmotors und die Rotationsachse des Propellers sind parallel oder befinden sich auf ein und derselben Achse.

Es ist vorgesehen, dass der Propeller und der Tauchmotor derart ausgestaltet sind, dass beim Betrieb des Tauchmotors eine vom Propeller zum Tauchmotor hin gerichtete Strömung erzeugt wird. Damit kann auf überraschend einfache Weise die Effizienz eines Horizontalrührwerks erheblich verbessert werden. Der Grund für die Verbesserung der Effizienz liegt im Wesentlichen darin, dass nach dem Gegenstand der Erfindung auf der Saugseite des Propellers sich keine Strömungshindernisse, insbesondere der Tauchmotor sowie ein Gestell zur Aufnahme des Tauchmotors, befinden. Es kann infolgedessen eine größere Menge an Flüssigkeit pro Zeiteinheit angesaugt und in horizontaler Richtung beschleunigt werden.

Nach einer weiteren Ausgestaltung ist vorgesehen, dass zur Erzeugung der zum Tauchmotor hin gerichteten Strömung zwei um dieselbe Rotationsachse gegenläufig rotierende Propeller vorgesehen sind. Es handelt sich bei dem einen Propeller um einen rechtsdrehenden und bei dem anderen Propeller um einen linksdrehenden Propeller, so dass beide Propeller im Sinne der vorliegenden Erfindung eine zum Tauchmotor hin gerichtete Strömung erzeugen. Mit der vorgeschlagenen "Doppelpropelleranordnung" kann auf besonders effiziente und einfache Weise der Ausbildung einer spiralförmigen oder so genannten "Zopfströmung" entgegengewirkt werden.

Nach weiterer Maßgabe der Erfindung ist eine Einrichtung zum Klären von Abwasser mit einem Klärbecken und zumindest einem darin aufgenommenen erfindungsgemäßen Horizontalrührwerk vorgesehen.

Nachfolgend werden Ausführungsbeispiele der Erfindung anhand der Zeichnungen näher erläutert. Es zeigen:
- Fig. 1: eine Frontansicht eines ersten Horizontalrührwerks,
- Fig. 2: eine Seitenansicht gemäß Fig. 1,
- Fig. 3: eine Draufsicht gemäß Fig. 1,
- Fig. 4: eine perspektivische Ansicht des ersten Horizontal- rührwerks gemäß Fig. 1,
- Fig. 5: eine Frontansicht eines zweiten Horizontalrühr- werks,
- Fig. 6: eine Seitenansicht gemäß Fig. 5,
- Fig. 7: eine Draufsicht gemäß Fig. 5,
- Fig. 8: eine perspektivische Ansicht des zweiten Horizon- talrührwerks gemäß Fig. 5,
- Fig. 9: eine Frontansicht eines dritten Horizontalrühr- werks,
- Fig. 10: eine Seitenansicht gemäß Fig. 9,
- Fig. 11: eine Draufsicht gemäß Fig. 9,
- Fig. 12: eine perspektivische Ansicht des dritten Horizon- talrührwerks gemäß Fig. 9,
- Fig. 13: eine Frontansicht eines vierten Horizontalrühr- werks ,
- Fig. 14: eine Seitenansicht gemäß Fig. 13,
- Fig. 15: eine Draufsicht gemäß Fig. 13;
- Fig. 16: eine perspektivische Ansicht des vierten Horizon- talrührwerks gemäß Fig. 13 und
- Fig. 17: eine Detailansicht gemäß Fig. 16.

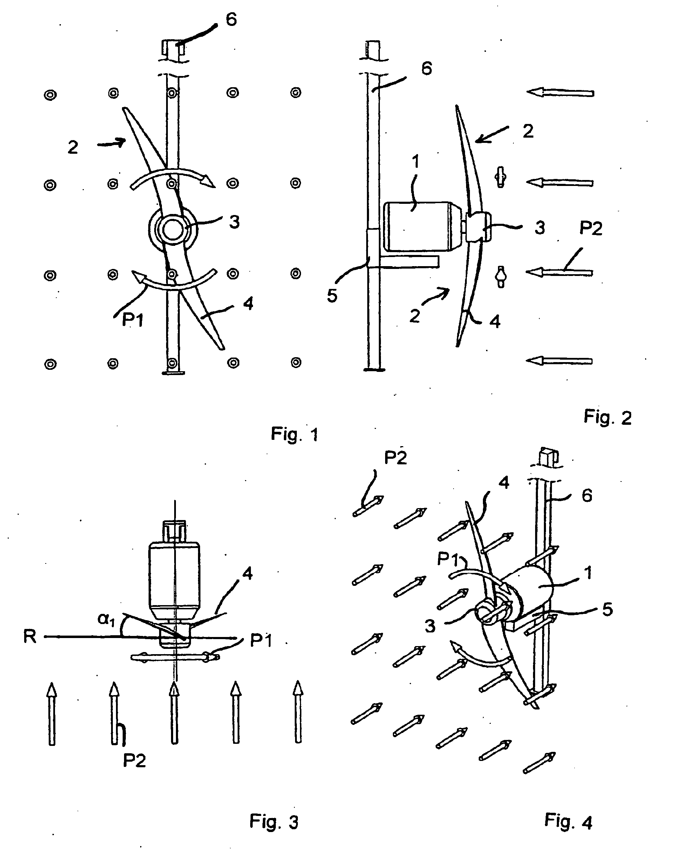

Bei dem in den Fig. 1 bis 4 gezeigten ersten Horizontalrührwerk ist ein Tauchmotor 1 in axialer Anordnung mit einem Propeller 2 antriebsmäßig verbunden. Der Propeller 2 weist zwei radial von einer Nabe 3 sich erstreckende Blätter 4 auf. Der Tauchmotor 1 ist an einem Schlitten 5 aufgenommen, der mittels einer (hier nicht gezeigten) Vertikalbewegungseinrichtung vertikal an einem säulenartig ausgebildeten Gestell 6 verfahrbar ist. Eine mögliche Ausgestaltung einer geeigneten Vertikalbewegungseinrichtung ist, z. B. in der DE 40 15 478 C1 beschrieben.

Ein aus der Fig. 3 ersichtlicher erster Profilanstellwinkel α1 der Blätter 4 gegenüber einer Radialebene R und eine mittels des Tauchmotors 1 bewirkte, durch die Pfeile P1 angedeutete Drehrichtung des Propellers 2 sind so gewählt, dass eine mit den zweiten Pfeilen P2 gezeigte horizontale Hauptstromrichtung vom Propeller 2 in Richtung des Tauchmotors 1 erzeugt wird. Wie aus den Fig. 1 bis 4 klar ersichtlich ist, befindet sich auf.der Saugseite des Propellers 2 kein Strömungshindernis, so dass auf diese Weise effizient Flüssigkeit in einer horizontalen Richtung gemäß den zweiten Pfeilen P2 beschleunigt werden kann.

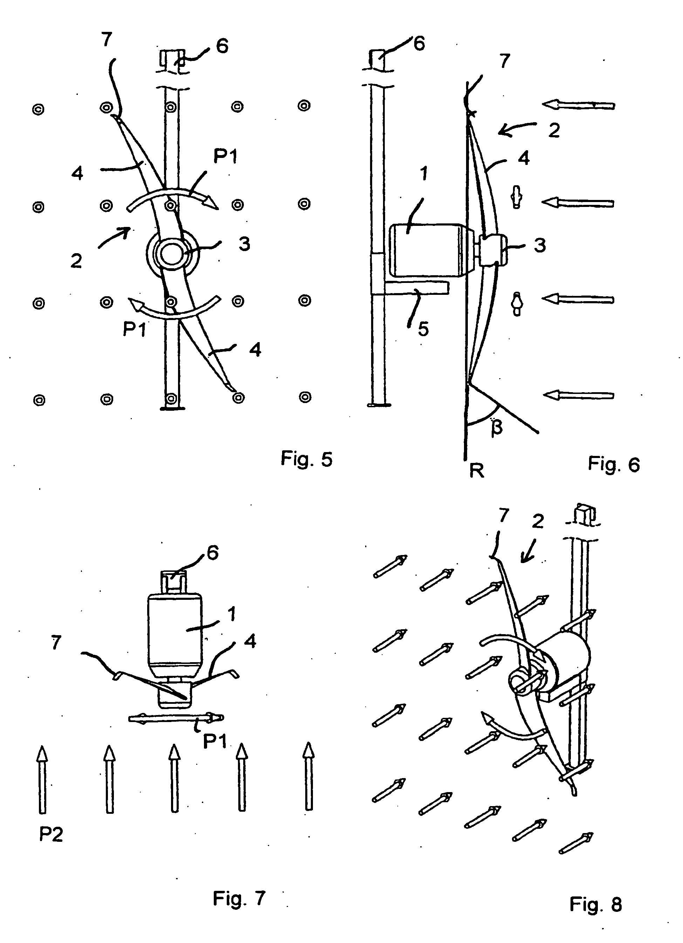

Bei dem in den Fig. 5 bis 8 gezeigten zweiten Horizontalrührwerk sind radial außen liegende Endabschnitte 7 der Blätter 4 in eine Richtung entgegen der mit den zweiten Pfeilen P2 angedeuteten Hauptstromrichtung umgebogen. Die vorgenannte horizontale Hauptstromrichtung P2 verläuft im Wesentlichen parallel zur ebenfalls horizontal verlaufenden Drehachse des Propellers 2. Wie insbesondere aus Fig. 6 ersichtlich ist, beträgt ein Umbiegungswinkel β gegenüber einer Radialebene R hier etwa 55°. Der Umbiegungswinkel β kann aber auch größer oder kleiner sein und vorzugsweise in einem Bereich zwischen 30 und 90° liegen. Insbesondere aus der Fig. 5 ist es ersichtlich, dass die Endabschnitte 7 eine Länge aufweisen, welche höchstens ein Fünftel des Radius der Blätter 4 entspricht. Im gezeigten Ausführungsbeispiel erstrecken sich die Endabschnitte 7 lediglich über ein Zehntel der radialen Länge der Blätter 4.

Ferner weisen die Endabschnitte 7 eine entgegengesetzt der mit den Pfeilen P1 angedeuteten Drehrichtung des Rotors 2 verlaufende Krümmung auf. Die vorgeschlagene Krümmung wirkt einem Einfangen zopfbildender Verunreinigungen entgegen.

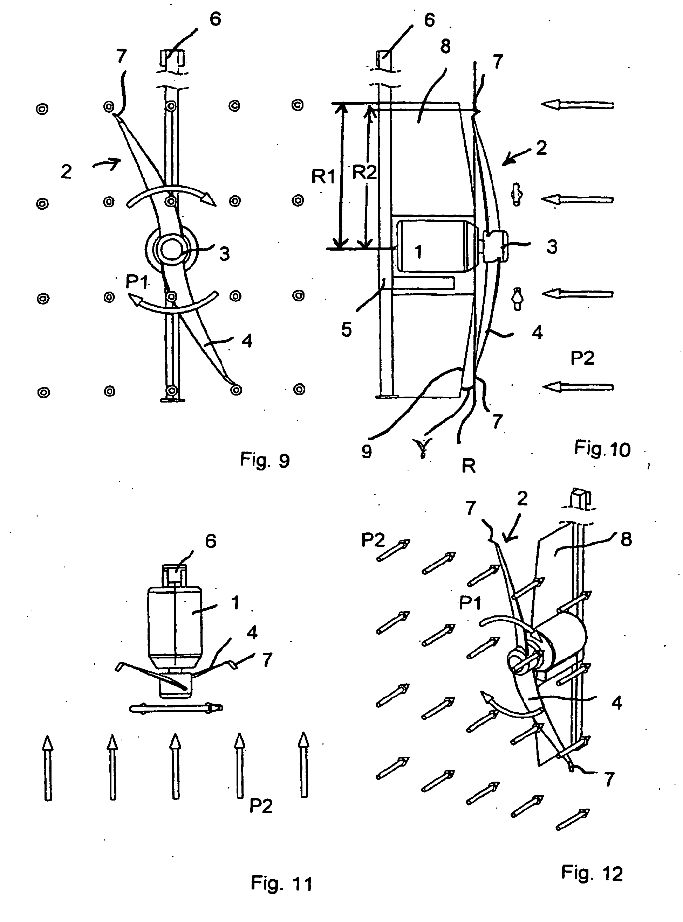

Die Fig. 9 bis 12 zeigen ein drittes Horizontalrührwerk, bei dem der Propeller 2 so wie beim zweiten Horizontalrührwerk ausgebildet ist. Der Propeller 2 weist wiederum umgebogene Endabschnitte 7 auf. Beim dritten Horizontalrührwerk sind stromabwärts des Propellers 2 in einer durch die Rotationsachse des Propellers 2 verlaufenden Axialebene sich erstreckende plattenförmige Strömungsleitelemente 8 vorgesehen. Die Strömungsleitelemente 8 sind bei dem gezeigten Ausführungsbeispiel am säulenartigen Gestell 6 angebracht. Selbstverständlich ist es auch möglich, die Strömungsleitelemente 8 am Tauchmotor 1 oder am Schlitten 5 zu befestigen. Die Strömungsleitelemente 8 erstrecken sich vom Tauchmotor 1 in radiale Richtung bis zu einem ersten Radius R1, welcher größer oder gleich einem zweiten Radius R2 des Propellers 2 ist. Der erste Radius R1 kann vorzugsweise das 1,0- bis 1,3-fache des zweiten Radius R2 sein.

Wie insbesondere aus Fig. 10 ersichtlich ist, sind Anströmkanten 9 gegenüber der Radialebene R geneigt. Ein Neigungswinkel γ öffnet sich radial nach außen hin und beträgt vorzugsweise 5 bis 25°. Anstelle einer geraden und geneigten Anströmkante 9 kann auch eine gekrümmte Anströmkante 9 vorgesehen sein, deren Krümmung in die Hauptstromrichtung P2 gerichtet ist.

Anstelle des Tauchmotors 1 kann auch eine Antriebseinrichtung vorgesehen sein, welche zusätzlich zum Tauchmotor 1 ein Getriebe umfasst:

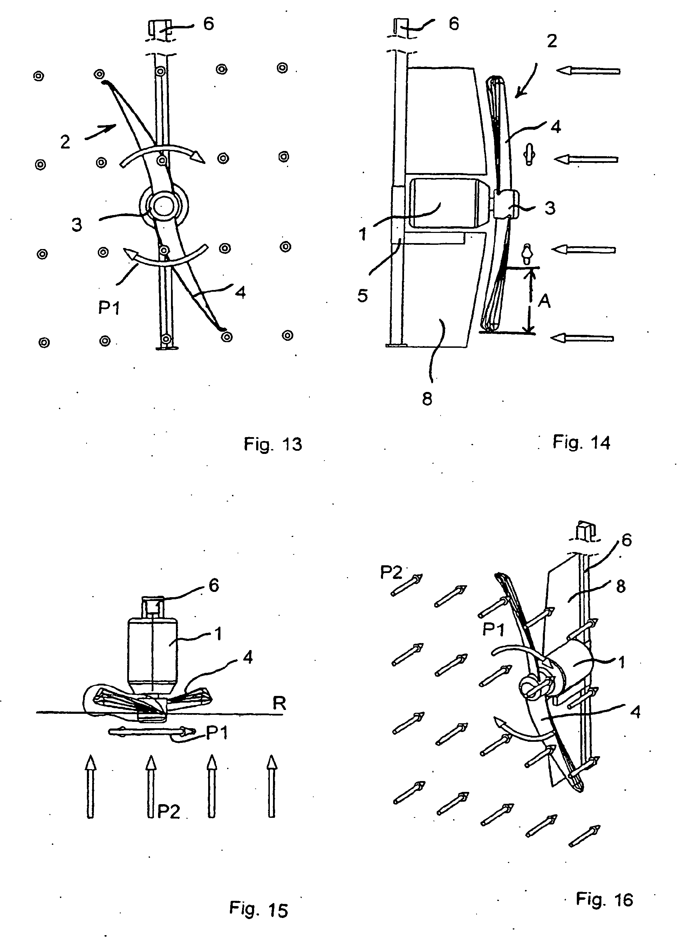

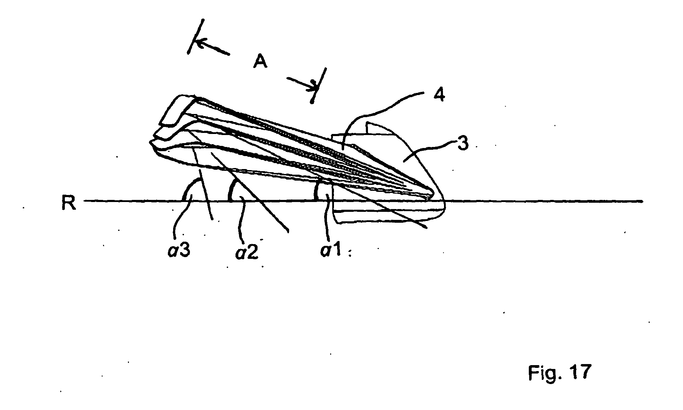

Die Fig. 13 bis 17 zeigen Ansichten eines vierten Horizontalrührwerks. Dabei sind die Blätter 4 des Propellers 2 sind aus einem Verbundwerkstoff hergestellt, bei dem in einer Kunststoffmatrix Fasern aufgenommen sind. Durch eine geeignete Auswahl, Kombination und Anordnung der Fasern im Verbundwerkstoff ist die Elastizität der Blätter 4 so eingestellt, dass vor allem ein außen liegender Abschnitt A bei Einwirkung eines Flüssigkeitsdrucks sich elastisch verformt. Durch geeignetes Werkstoffdesign erfolgt die elastische Verformung so, dass ein Profilanstellwinkel des äußeren Abschnitts A gegenüber der senkrecht durch die Rotationsachse verlaufenden Radialebene R mit zunehmenden Flüssigkeitsdruck größer wird. Wie insbesondere aus Fig. 17 ersichtlich ist, verwindet sich insbesondere ein äußerer Abschnitt A der Blätter 4 mit zunehmendem Flüssigkeitsdruck bzw. mit zunehmender Drehzahl. Ein erster Anstellwinkel α1 gibt die Form der Blätter bei einer geringen Drehzahl, ein zweiter Anstellwinkel α2 die Form der Blätter bei einer mittleren Drehzahl und ein dritter Anstellwinkel α3 bei einer hohen Drehzahl wieder. Mit zunehmender Drehzahl bzw. mit zunehmendem Flüssigkeitsdruck nimmt der Anstellwinkel der Blätter 4 gegenüber der Radialebene R zu.

Zur Einstellung der gewünschten elastischen Formänderung der Blätter 4 in Abhängigkeit eines darauf wirkenden Flüssigkeitsdrucks können unterschiedliche Fasern, beispielsweise Kohle- und/oder Aramid- und/oder hochverstreckte Polyethylen-fasern miteinander kombiniert werden. Die gewünschten elastischen Eigenschaften können ferner durch die Ausrichtung und die Anzahl der Faserlagen sowie durch die Dicke des Profils beeinflusst werden.

Nach einer besonders vorteilhaften Ausgestaltung ist vorgesehen, dass der Propeller insgesamt ein Gewicht hat, welches der durch sein Volumen verdrängten Menge an Wasser bzw. Abwasser entspricht. D. h. der Propeller ist so schwer, dass er im in das Abwasser untergetauchten Zustand keinen Auftrieb erfährt. Zu diesem Zweck kann der Verbundwerkstoff mit metallischen Partikeln oder metallischen Inserts, welche beispielsweise aus Blei hergestellt sind, versehen sein.

### Bezugszeichenliste

- 1: Tauchmotor
- 2: Propeller
- 3: Nabe
- 4: Blatt
- 5: Schlitten
- 6: Gestell
- 7: Endabschnitt
- 8: Strömungsleitelement
- 9: Anströmkante

- R: Radialebene
- R1: erster Radius
- R2: zweiter Radius
- A: außen liegender Abschnitt
- P1: Drehrichtung des Propellers
- P2: axiale Hauptstromrichtung
- α1: erster Anstellwinkel
- α2: zweiter Anstellwinkel
- α3: dritter Anstellwinkel
- β: Umbiegungswinkel
- γ: Neigungswinkel der Anströmkante

## Patentansprüche

1. Horizontalrührwerk zum Erzeugen einer Strömung in einem Klärbecken, bei dem ein mehrere Blätter (4) aufweisender Propeller (2) mit einem dazu axial versetzt angeordneten Tauchmotor (1) verbunden ist, wobei stromabwärts des Propellers (2) in min- destens einer Axialebene sich erstreckende plattenförmige Strömungsleitelemente (8) vorgesehen sind,
**dadurch gekennzeichnet, dass**
der Propeller (2) und der Tauchmotor (1) derart ausgestaltet sind, dass beim Betrieb des Tauchmotors (1) eine vom Propeller (2) zum Tauchmotor (1) hin gerichtete Strömung (P2) erzeugt wird.

2. Horizontalrührwerk nach Anspruch 1, wobei die Strömungsleitelemente (8) aus einem Blech oder faserverstärktem Kunststoff hergestellt sind.

3. Horizontalrührwerk nach einem der vorhergehenden Ansprüche, wobei die Strömungsleitelemente (8) sich in einer Vertikalebene und/oder einer Horizontalebene erstrecken.

4. Horizontalrührwerk nach einem der vorhergehenden Ansprüche, wobei die Strömungsleitelemente (8) an einem den Tauchmotor (1) aufnehmenden Gestell (6) angebracht sind.

5. Horizontalrührwerk nach einem der vorhergehenden Ansprüche, wobei die Strömungsleitelemente (8) am Täuchmotor (1) oder an einer den Tauchmotor (1) umfassenden Antriebseinrichtung angebracht sind.

6. Horizontalrührwerk nach einem der vorhergehenden Ansprüche, wobei der Tauchmotor (1) oder die Antriebseinrichtung an einer am Gestell (6) vorgesehenen Vertikalbewegungseinrichtung (5) befestigt ist.

7. Horizontalrührwerk nach einem der vorhergehenden Ansprüche, wobei eine Anströmkante (9) der Strömungsleitelemente (8) mit zunehmendem radialen Abstand eine in die Hauptstromrichtung (P2) weisende Neigung (γ) oder Krümmung aufweist.

8. Horizontalrührwerk nach einem der vorhergehenden Ansprüche, wobei eine elastische Formänderung der aus einem elastisch verformbaren Material hergestellten Blätter (4) so eingestellt ist, dass deren Profilanstellwinkel (α1, α2, α3) zumindest im Bereich eines radial außen liegenden Abschnitts (A) mit zunehmender Rotationsgeschwindigkeit in vorgegebener Weise sich vergrößert.

9. Horizontalrührwerk nach einem der vorhergehenden Ansprüche, wobei die Blätter (4) aus einem mit Fasern verstärkten Verbundwerkstoff hergestellt sind.

10. Horizontalrührwerk nach Anspruch 9, wobei eine Matrix der verbundwerkstoffs aus Kunststoff hergestellt ist.

11. Horizontalrührwerk nach einem der Ansprüche 9 bis 10, wobei der Verbundwerkstoff als Fasern Kohle- und/oder Aramid- und/oder hochverstreckte Polyethylen-Fasern enthält.

12. Horizontalrührwerk nach Ansprüche 8 und 9, wobei die elastische Formänderung der Blätter (4) durch die Auswahl, Menge und Anordnung der Fasern eingestellt wird.

13. Horizontalrührwerk nach Anspruch 8, wobei die elastische Formänderung durch die Dicke des Profils eingestellt wird.

14. Horizontalrührwerk nach einem der vorhergehenden Ansprüche, wobei der Propeller (2) eine Dichte im Bereich von 0,9 bis 1,1 g/cm³ aufweist.

15. Horizontalrührwerk nach einem der vorhergehenden Ansprüche, wobei radial außen liegende Endabschnitte (7) der Blätter (4) in eine Richtung entgegen der vom Propeller erzeugten axialen Hauptstromrichtung (P2) umgebogen sind.

16. Horizontalrührwerk nach Anspruch 15, wobei die umgebogenen Endabschnitte (7) in einer Radialebene (R) eine der Drehrichtung (P1) des Propellers (2) entgegengesetzte Krümmung aufweisen.

17. Horizontalrührwerk nach Ansprüchen 15 oder 16, wobei eine Länge des Endabschnitts (7) höchstens 1/5 des Radius (R2) des Blatts (4) beträgt.

18. Horizontalrührwerk nach einem der vorhergehenden Ansprüche, wobei der Tauchmotor (1) axial zum Propeller (2) angelracht ist.

19. Horizontalrührwerk nach einem der vorhergehenden Ansprüche, wobei zur Erzeugung der zum Tauchmotor (1) hin gerichteten Strömung (P2) zwei um dieselbe Rotationsachse gegenläufig drehende Propeller (2) vorgesehen sind.

20. Einrichtung zum Klären von Abwasser mit einem Klärbecken und zumindest einem darin aufgenommenen Horizontalrührwerk nach einem der vorhergehenden Ansprüche.

## Claims

1. A horizontal agitator for producing a flow in a clearing basin, wherein a propeller (2) having a plurality of blades (4) is connected to a submersible motor (1) arranged axially displaced thereto, wherein plate-shaped flow conducting elements (8) extending in at least one axial plane are provided downstream of the propeller (2),
**characterized in that**
the propeller (2) and the submersible motor (1) are configured such that during operation of the submersible motor (1) a flow (P2) is produced in the direction from the propeller (2) to the submersible motor (1).

2. A horizontal agitator as defined in claim 1, wherein the flow conducting elements (8) are made of sheet metal or fiber-reinforced plastic.

3. A horizontal agitator as defined in one of the preceding claims, wherein the flow conducting elements (8) extend in a vertical plane and/or a horizontal plane.

4. A horizontal agitator as defined in one of the preceding claims, wherein the flow conducting elements (8) are attached to a frame (6) holding the submersible motor (1).

5. A horizontal agitator as defined in one of the preceding claims, wherein the flow conducting elements (8) are attached to the submersible motor (1) or to a drive unit comprising the submersible motor (1).

6. A horizontal agitator as defined in one of the preceding claims, wherein the submersible motor (1) or the drive unit is fixed to a vertical movement unit (5) provided on the frame (6).

7. A horizontal agitator as defined in one of the preceding claims, wherein, with increasing radial distance, a leading edge (9) of the flow conducting elements (8) has an inclination (γ) or curve directed to the main flow direction (P2).

8. A horizontal agitator as defined in one of the preceding claims, wherein an elastic deformation of the blades (4) made from an elastically deformable material is set so that their profile pitch angle (α1, α2, α3) increases in a specified manner at least in the area of a radial, outer section (A) with increasing rotation speed.

9. A horizontal agitator as defined in one of the preceding claims, wherein the blades (4) are made from a composite material being reinforced with fibers.

10. A horizontal agitator as defined in claim 9, wherein a matrix of the composite materials is made of plastic.

11. A horizontal agitator as defined in claims 9 to 10, wherein the composite material contains as fibres carbon and/or aramid and/or highly stretched polyethylene fibers.

12. A horizontal agitator as defined in claims 8 and 9, wherein the elastic deformation of the blades (4) is set by the selection, amount and arrangement of the fibers.

13. A horizontal agitator as defined in claim 8, wherein the elastic deformation is set by the thickness of the profile.

14. A horizontal agitator as defined in one of the preceding claims, wherein the propeller (2) has a density in the range from 0.9 to 1.1 g/cm³.

15. A horizontal agitator as defined in one of the preceding claims, wherein radial, outer end sections (7) of the blades (4) are bent in a direction opposite the axial main flow direction (P2) produced by the propeller.

16. A horizontal agitator as defined in claim 15, wherein the bent end sections (7) have a curve opposite to the rotating direction (P1) of the propeller (2) in a radial plane (R).

17. A horizontal agitator as defined in claim 15 or 16, wherein a maximum length of the end section (7) is 1/5 of the radius (R2) of the blade (4).

18. A horizontal agitator as defined in one of the preceding claims, wherein the submersible motor (1) is attached axially to the propeller (2).

19. A horizontal agitator as defined in one of the preceding claims, wherein two propellers (2) rotating in opposite directions around the same rotary axis are provided to produce the flow (P2) directed towards the submersible motor (1).

20. An arrangement for clarifying waste water having a clearing basin and having accommodated therein at least one horizontal agitator as defined in one of the preceding claims.

## Revendications

1. Agitateur horizontal pour produire un courant dans un bassin de décantation, selon lequel une hélice (2) présentant plusieurs pales (4) est reliée à un moteur submersible (1) disposé avec un décalage axial par rapport à elle, où en aval de l'hélice (2) des éléments de guidage de courant (8) de forme plate s'étendant dans au moins un plan axial sont prévus,
**caractérisé en ce que**
l'hélice (2) et le moteur submersible (1) sont conçus de telle sorte qu'un courant (P2) dirigé de l'hélice (2) vers le moteur submersible (1) est produit lors du fonctionnement du moteur submersible (1).

2. Agitateur horizontal selon la revendication 1, où les éléments de guidage de courant (8) sont réalisés à partir d'une tôle ou en matière plastique renforcée de fibres.

3. Agitateur horizontal selon l'une des revendications précédentes, où les éléments de guidage de courant (8) s'étendent dans un plan vertical et/ou dans un plan horizontal.

4. Agitateur horizontal selon l'une des revendications précédentes, où les éléments de guidage de courant (8) sont montés sur un bâti (6) logeant le moteur submersible (1).

5. Agitateur horizontal selon l'une des revendication précédentes, où les éléments de guidage de courant (8) sont montés sur le moteur submersible (1) ou sur un dispositif d'entraînement comprenant le moteur submersible (1).

6. Agitateur horizontal selon l'une des revendications précédentes, où le moteur submersible (1) ou le dispositif d'entraînement est fixé sur un dispositif de déplacement vertical (5) prévu sur le bâti (6).

7. Agitateur horizontal selon l'une des revendications précédentes, où un bord d'attaque (9) des éléments de guidage de courant (8) présente une inclinaison (γ) ou courbure dirigée dans le sens du courant principal (P2) à une distance radiale croissante.

8. Agitateur horizontal selon l'une des revendications précédentes, où une déformation élastique des pales (4) réalisées en un matériau élastique déformable est définie de façon telle que leur angle d'attaque de profil (α1, α2, α3) au moins dans la zone d'un segment extérieur radial (A) s'agrandit de manière prédéfinie à une vitesse de rotation croissante.

9. Agitateur horizontal selon l'une des revendications précédentes, où les pales (4) sont réalisées en un matériau composite renforcé de fibres.

10. Agitateur horizontal selon la revendication 9, où une matrice du matériau composite est réalisée en matière plastique.

11. Agitateur horizontal selon l'une des revendications 9 à 10, où le matériau composite contient comme fibres des fibres de carbone et/ou d'aramide et/ou des fibres de polyéthylène très étirées.

12. Agitateur horizontal selon les revendications 8 et 9, où la déformation élastique des pales (4) est définie par le choix, la quantité et la disposition des fibres.

13. Agitateur horizontal selon la revendication 8, où la déformation élastique est définie par l'épaisseur du profilé.

14. Agitateur horizontal selon l'une des revendications précédentes, où l'hélice (2) présente une densité dans la zone comprise entre 0,9 et 1,1 g/cm³.

15. Agitateur horizontal selon l'une des revendications précédentes, où les segments d'extrémité (7) extérieurs radiaux des pales (4) sont recourbés dans une direction opposée au sens du courant principal axial (P2) produit par l'hélice.

16. Agitateur horizontal selon la revendication 15, où les segments d'extrémité (7) recourbés présentent une courbure opposée au sens de rotation (P1) de l'hélice (2) dans un plan radial (R).

17. Agitateur horizontal selon l'une des revendications 15 ou 16, où une longueur du segment d'extrémité (7) est égale au maximum à 1/5 du rayon (R2) de la pale (4).

18. Agitateur horizontal selon l'une des revendications précédentes, où le moteur submersible (1) est monté axialement par rapport à l'hélice (2).

19. Agitateur horizontal selon l'une des revendications précédentes, où deux hélices (2) tournant en sens opposé autour du même axe de rotation sont prévues pour la production d'un courant (P2) dirigé vers le moteur submersible (1).

20. Dispositif pour la décantation d'eaux usées avec un bassin de décantation et au moins un agitateur horizontal logé à l'intérieur de ce dernier selon l'une des revendications précédentes.
